# FASCICULE DE BREVET EUROPEEN

(11) **EP 3 386 779 B1**
(45) Date de publication et mention de la délivrance du brevet: **18.09.2019**
(21) Numéro de dépôt: 16825466.2
(22) Date de dépôt: 09.12.2016
(51) Int. Cl.: B60G 3/20, B60K 1/04, B60G 7/02, B62D 21/11

(54) **TRAIN ARRIERE ET SON DISPOSITIF DE FIXATION**
HINTERACHSANORDNUNG UND VORRICHTUNG ZUR SICHERUNG DAVON
REAR AXLE ASSEMBLY AND DEVICE FOR SECURING SAME

(30) Priorité: 09.12.2015 FR 1562047
(43) Date de publication de la demande: 17.10.2018
(73) Titulaire: Renault s.a.s, 92100 Boulogne-Billancourt (FR)
(72) Inventeur: EJARQUE, Pascal, 78370 Plaisir (FR)
(86) Numéro de dépôt international: PCT/FR2016/053300
(87) Numéro de publication internationale: WO 2017/098183

(56) Documents cités:
- EP-A1- 1 982 857
- WO-A1-2017/055028
- DE-A1-102011 081 836
- DE-A1-102013 210 575
- DE-B3-102012 010 897

## Description

### 1. Domaine de l'invention

L'invention concerne un dispositif de fixation d'un train arrière de véhicule automobile et un véhicule automobile qui en est équipé.

### 2. Art antérieur

Les véhicules actuels sont soumis à des normes environnementales imposant la réduction des émissions de CO2. Pour répondre à ces normes, les constructeurs automobiles allègent les structures des véhicules pour réduire les pertes par frottement et pour diminuer les coûts de matière première et développent des modèles de véhicules électriques ou hybrides en augmentant la capacité de leurs batteries afin d'accroître la part d'énergie électrique utilisée par ces véhicules.

L'augmentation de la capacité des batteries des véhicules pose deux problèmes techniques. Le premier concerne le manque d'espace disponible pour agencer le réservoir, le moteur et la batterie dont le volume croît avec la capacité. Le second problème est l'augmentation du poids de la batterie qui ne va pas dans le sens de l'allègement des structures des véhicules.

L'augmentation du volume des batteries est particulièrement gênée par l'essieu en H supportant le train arrière des véhicules. Cet essieu est une structure imposante permettant de reprendre les efforts d'accélération, de freinage et de ripage supportés par le train arrière. Afin de résister à la déformation en présence des efforts précités, l'essieu est relié au plancher de manière à présenter une raideur importante.

Dans le but d'alléger la structure de l'essieu de leurs véhicules électriques ou hybrides, certains constructeurs automobiles fixent le train arrière directement sur la batterie. Cet agencement présente plusieurs inconvénients. Premièrement, les longerons du train arrière sont susceptibles de percer la batterie en cas de choc violent. Deuxièmement, il est nécessaire de renforcer la structure de la batterie pour lui permettre de supporter les vibrations transmises par le train arrière. En outre, cet agencement ne permet pas d'utiliser le véhicule automobile en absence de batterie. En effet, en démontant la batterie, le train est démonté par la même occasion. Enfin, cet agencement ne permet pas un accès séparé aux différents ensembles du train arrière et de la batterie, ce qui complique le montage et le démontage des pièces. De plus, ceci présente donc le désavantage d'augmenter les temps de maintenance de ces ensembles.

Des trains arrières selon le préambule de la revendication 1 sont connus des documents DE 10 2013 210575 A1, DE 10 2011 081836 A et DE 10 2012 010897 B3. Le document WO 2017/055028 A1, qui est publié postérieurement, divulgue un train arrière qui est fixé indirectement, par l'intermédiaire d'un boîtier à la batterie.

### 3. Objectifs de l'invention

L'invention propose une solution visant à pallier les inconvénients précités. Un objectif de l'invention est de fournir un ensemble d'éléments de fixation d'un train arrière de véhicule automobile permettant de réduire l'encombrement et le poids de la structure supportant le train arrière du véhicule, tout en étant simple, peu coûteuse et sûre.

### 4. Résumé de l'invention

L'invention a pour objet un train arrière d'un véhicule automobile, le véhicule automobile comprenant une batterie fixée sur une caisse, le train arrière comprenant au moins une première bielle transversale et au moins une deuxième bielle transversale opposée à l'au moins une première bielle par rapport à la caisse, l'ensemble de fixation comprenant un organe de liaison comportant au moins une première plaque de fixation agencée de sorte à être fixée à la batterie ; au moins un premier élément de fixation agencé de sorte à fixer l'au moins une première bielle à l'organe de liaison ; et au moins un deuxième élément de fixation agencé de sorte à fixer l'au moins une deuxième bielle à l'organe de liaison.

Selon un mode de réalisation particulier, l'organe de liaison comporte en outre une deuxième plaque de manière à prendre en étau l'au moins une première bielle et l'au moins une deuxième bielle entre l'au moins une première plaque et la deuxième plaque au niveau de l'au moins un premier élément de fixation et de l'au moins un deuxième élément de fixation.

Selon un mode de réalisation particulier, le train arrière comporte en outre une traverse agencée de manière à être fixée à la caisse, la traverse étant fixée à l'organe de liaison.

Selon un mode de réalisation particulier, l'organe de liaison est en tôle.

Selon un mode de réalisation particulier, l'au moins un premier élément de fixation ou l'au moins un deuxième élément de fixation est une liaison pivot.

Selon un mode de réalisation particulier, le véhicule comportant en outre une troisième bielle et une quatrième bielle, l'organe de liaison comporte quatre articulations destinées à être reliées respectivement aux quatre bielles.

Selon un mode de réalisation particulier, l'au moins une première plaque de fixation est fixée à la face arrière de la batterie.

L'invention concerne aussi un véhicule comprenant ledit train arrière.

### 5. Liste des figures

D'autres caractéristiques et avantages de l'invention ressortiront de la description ci-après, fournie à titre indicatif et nullement limitatif, en référence aux dessins annexés, dans lesquels :
- La figure 1 est une vue de dessus et partielle d'un mode de réalisation d'un ensemble de fixation selon l'invention monté sur un train arrière de véhicule automobile ; et,
- La figure 2 est une vue en perspective partielle d'un mode de réalisation d'un ensemble de fixation de train arrière selon l'invention monté sur batterie ; et,
- La figure 3 est une vue de dessous en perspective du mode de réalisation d'un ensemble de fixation de train arrière selon l'invention monté sur batterie de la figure 2; et,
- La figure 4 est une vue en perspective et partielle d'un mode de réalisation d'un ensemble de fixation selon l'invention monté sur un train arrière de véhicule automobile.

### 6. Description détaillée

L'invention concerne un ensemble 1 de fixation d'un train arrière 2 d'un véhicule automobile.

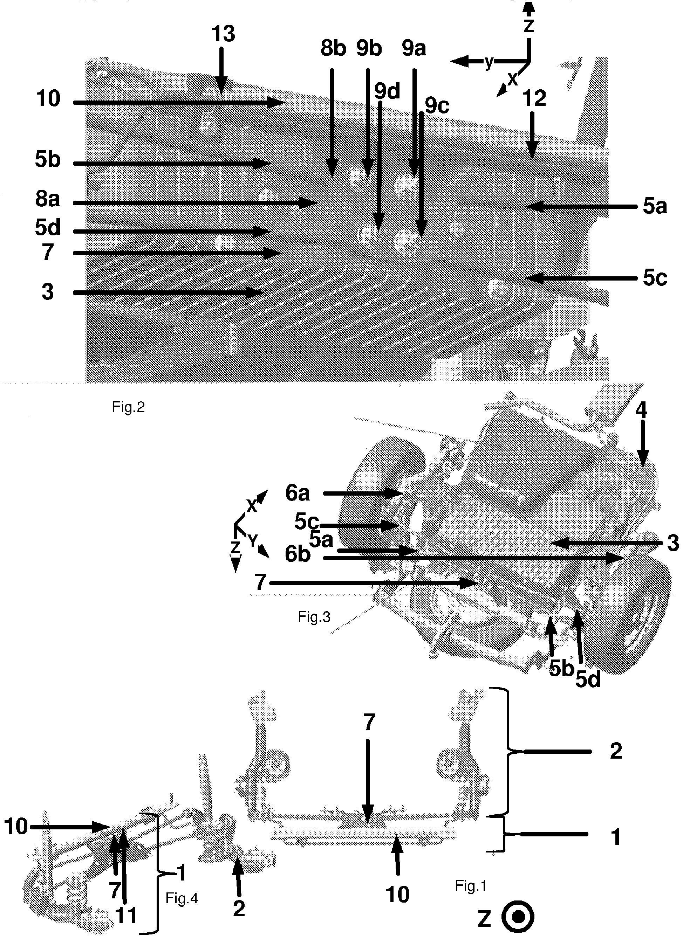

En référence à la figure 1, est représenté un train arrière 2 d'un véhicule automobile en vue de dessus par rapport à un vecteur vertical Z perpendiculaire au plan du plancher du véhicule, le dessus étant défini par le sens du vecteur Z. Le train arrière 2 est fixé à un ensemble 1 de fixation faisant l'objet de l'invention. L'ensemble 1 de fixation comporte un organe de liaison 7 assurant la fixation du train arrière 2 avec l'ensemble 1 de fixation. La figure 1 représente également une traverse 10 faisant l'objet d'un mode de réalisation particulier de l'invention décrit par la suite.

En référence à la figure 2, est représenté l'organe de liaison 7, en vue zoomée, par rapport à un vecteur longitudinal X suivant lequel s'étend le véhicule, un vecteur transversal Y parallèle à l'axe qui relie le centre des deux roues arrières et un vecteur vertical Z perpendiculaire au plancher du véhicule. L'organe de liaison 7 comporte une plaque (8a) fixées à la face arrière de la batterie, l'arrière étant défini par le sens inverse du vecteur X. Le train arrière 2 comporte quatre bielles, deux bielles 5b et 5d sont situées à gauche de l'organe de liaison 7, la gauche étant définie par le sens du vecteur Y, deux bielles 5a et 5c sont situées à droite de l'organe de liaison 7, la droite étant définie par le sens inverse du vecteur Y. L'organe de liaison 7 comporte en outre quatre articulations fixées aux quatre bielles du train arrière 2. Plus précisément, l'organe de liaison 7 comporte deux articulations 9a et 9c fixées aux deux bielles 5a et 5c situées à sa droite, et deux articulations 9b et 9d fixées aux deux bielles 5b et 5d situées à sa gauche. La figure 2 représente également la traverse 10 faisant l'objet d'un mode de réalisation particulier de l'invention décrit par la suite.

En référence à la figure 3, est représenté l'organe de liaison 7, en vue dé-zoomée, par rapport à un vecteur longitudinal X suivant lequel s'étend le véhicule, un vecteur transversal Y parallèle à l'axe qui relie le centre des deux roues arrières et un vecteur vertical Z perpendiculaire au plancher du véhicule. Conformément à ce qui a été décrit à la figure 2, l'organe de liaison 7 comporte quatre articulations fixées respectivement aux quatre bielles 5a, 5b, 5c et 5d du train arrière. Les deux bielles 5a et 5c de droite sont fixées au support de roue 6a et les deux bielles 5b et 5d de gauche sont fixées au support de roue 6b. Est également représentée la batterie 3 fixée de manière rigide à la caisse 4.

En référence à la figure 4, est représenté un train arrière 2 d'un véhicule automobile en perspective. Le train arrière 2 est fixé à un ensemble 1 de fixation faisant l'objet de l'invention au niveau de l'organe de liaison 7.

Selon une configuration de l'invention, l'ensemble 1 comprend une barre transversale 10 fixée de manière rigide au support de roue gauche (non représenté) par une extrémité et au support de roue droit (non représenté) par une autre extrémité. En outre, la barre transversale 10 est fixée de manière rigide au niveau de la fixation 11 à l'organe de liaison 7 de façon à supporter l'ensemble 1 lorsque la batterie est enlevée et donc de façon à tenir le train en l'absence de batterie. Bien entendu, la traverse 10 peut être intégrée à l'organe de liaison 7.

Comme représenté sur la figure 2, en variante, une barre antiroulis 12 coulisse dans des oeillets 13 fixés à la traverse 10 pour permettre une plus grande rigidité de l'ensemble 1.

De manière préférée, mais non limitativement, les articulations 9a, 9b, 9c et 9d sont des liaisons pivots.

De manière préférée, mais non limitativement, l'ensemble 1 est en aluminium ou en acier.

Selon un mode de réalisation particulier, l'organe de liaison 7 comprend deux parties 8a et 8b de manière à prendre en étau les quatre bielles 5a, 5b, 5c et 5d du train arrière 2.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Train arrière (2) d'un véhicule automobile, le véhicule automobile comprenant une batterie (3) fixée sur une caisse (4), le train arrière (2) comprenant au moins une première bielle (5a) transversale et au moins une deuxième bielle (5b) transversale opposée à l'au moins une première bielle (5a) par rapport à la caisse (4),
**caractérisé en ce qu'**il comporte un ensemble (1) de fixation comprenant un organe de liaison (7) comportant :
- au moins une première plaque de fixation (8a) agencée de sorte à être montée sur la batterie (3) ;
- au moins un premier élément de fixation (9a) agencé de sorte à fixer l'au moins une première bielle (5a) à l'organe de liaison (7) ;
- au moins un deuxième élément de fixation (9b) agencé de sorte à fixer l'au moins une deuxième bielle (5b) à l'organe de liaison (7) ; et
- une deuxième plaque (8b) de manière à prendre en étau l'au moins une première bielle (5a) et l'au moins une deuxième bielle (5b) entre l'au moins une première plaque (8a) et la deuxième plaque (8b) au niveau de l'au moins un premier élément de fixation (9a) et de l'au moins un deuxième élément de fixation (9b).

2. Train arrière (2) selon l'une quelconque des revendications précédentes, **caractérisé en ce qu'**il comporte en outre une traverse (10) agencée de manière à être fixée à la caisse (4), la traverse (10) étant fixée à l'organe de liaison (7).

3. Train arrière (2) selon l'une quelconque des revendications précédentes, **caractérisé en ce que** l'organe de liaison (7) est en tôle.

4. Train arrière (2) selon l'une quelconque des revendications précédentes, **caractérisé en ce que** l'au moins un premier élément de fixation (9a) ou l'au moins un deuxième élément de fixation (9b) est une liaison pivot.

5. Train arrière (2) selon l'une quelconque des revendications précédentes, **caractérisé en ce que,** le véhicule comportant en outre une troisième bielle (5c) et une quatrième bielle (5d), l'organe de liaison (7) comporte quatre articulations (9a, 9b, 9c et 9d) destinées à être reliées respectivement aux quatre bielles (5a, 5b, 5c et 5d).

6. Train arrière (2) selon l'une quelconque des revendications précédentes, **caractérisé en ce que** l'au moins une première plaque de fixation (8a) est fixée à la face arrière de la batterie (3).

7. Véhicule **caractérisé en ce qu'**il comprend un train arrière (2) selon l'une quelconque des revendications précédentes.

## Patentansprüche

1. Hinterachse (2) eines Kraftfahrzeugs, wobei das Kraftfahrzeug eine Batterie (3) umfasst, die an einem Gehäuse (4) befestigt ist, wobei die Hinterachse (2) mindestens einen ersten Querlenker (5a) und mindestens einen zweiten Querlenker (5b), der in Bezug auf das Gehäuse (4) entgegengesetzt zu dem mindestens einen ersten Querlenker (5a) ist, umfasst,
**dadurch gekennzeichnet, dass** sie eine Befestigungsanordnung (1) aufweist, die ein Verbindungsorgan (7) umfasst, das aufweist:
- mindestens eine erste Befestigungsplatte (8a), die so gestaltet ist, dass sie an der Batterie (3) montiert wird;
- mindestens ein erstes Befestigungselement (9a), das so gestaltet ist, dass es den mindestens einen ersten Lenker (5a) am Verbindungsorgan (7) befestigt;
- mindestens ein zweites Befestigungselement (9b), das so gestaltet ist, dass es den mindestens einen zweiten Lenker (5b) am Verbindungsorgan (7) befestigt; und
- eine zweite Platte (8b), so dass der mindestens eine erste Lenker (5a) und der mindestens eine zweite Lenker (5b) zwischen der mindesten einen ersten Platte (8a) und der zweiten Platte (8b) an dem mindestens einen ersten Befestigungselement (9a) und dem mindestens einen zweiten Befestigungselement (9b) eingespannt werden.

2. Hinterachse (2) nach einem der vorhergehenden Ansprüche, **dadurch gekennzeichnet, dass** sie ferner einen Querträger (10) aufweist, der so gestaltet ist, dass er an dem Gehäuse (4) befestigt ist, wobei der Querträger (10) am Verbindungsorgan (7) befestigt ist.

3. Hinterachse (2) nach einem der vorhergehenden Ansprüche, **dadurch gekennzeichnet, dass** das Verbindungsorgan (7) aus Blech ist.

4. Hinterachse (2) nach einem der vorhergehenden Ansprüche, **dadurch gekennzeichnet, dass** das mindestens eine erste Befestigungselement (9a) oder das mindestens eine zweite Befestigungselement (9b) eine Schwenkverbindung ist.

5. Hinterachse (2) nach einem der vorhergehenden Ansprüche, **dadurch gekennzeichnet, dass**, wenn das Fahrzeug ferner einen dritten Lenker (5c) und einen vierten Lenker (5d) aufweist, das Verbindungsorgan (7) vier Gelenke (9a, 9b, 9c und 9d) aufweist, die dazu bestimmt sind, mit den vier Lenkern (5a, 5b, 5c und 5d) verbunden zu werden.

6. Hinterachse (2) nach einem der vorhergehenden Ansprüche, **dadurch gekennzeichnet, dass** die mindestens eine erste Befestigungsplatte (8a) an der Rückseite der Batterie (3) befestigt ist.

7. Fahrzeug, **dadurch gekennzeichnet, dass** es eine Hinterachse (2) nach einem der vorhergehenden Ansprüche umfasst.

## Claims

1. Rear axle assembly (2) of a motor vehicle, the motor vehicle comprising a battery (3) fastened to a body (4), the rear axle assembly (2) comprising at least one first transverse link rod (5a) and at least one second transverse link rod (5b) opposite to the at least one first link rod (5a) with respect to the body (4),
**characterized in that** it comprises a fastening assembly (1) comprising a connecting member (7) comprising:
- at least one first fastening plate (8a) arranged so as to be mounted on the battery (3);
- at least one first fastening element (9a) arranged so as to fasten the at least one first link rod (5a) to the connecting member (7);
- at least one second fastening element (9b) arranged so as to fasten the at least one second link rod (5b) to the connecting member (7); and
- a second plate (8b) so as to clamp the at least one first link rod (5a) and the at least one second link rod (5b) between the at least one first plate (8a) and the second plate (8b) in the region of the at least one first fastening element (9a) and in the region of the at least one second fastening element (9b).

2. Rear axle assembly (2) according to any one of the preceding claims,
**characterized in that** it additionally comprises a crossmember (10) arranged so as to be fastened to the body (4), the crossmember (10) being fastened to the connecting member (7).

3. Rear axle assembly (2) according to either one of the preceding claims, **characterized in that** the connecting member (7) is made of sheet metal.

4. Rear axle assembly (2) according to any one of the preceding claims, **characterized in that** the at least one first fastening element (9a) or the at least one second fastening element (9b) is a pivot connection.

5. Rear axle assembly (2) according to any one of the preceding claims, **characterized in that,** with the vehicle additionally comprising a third link rod (5c) and a fourth link rod (5d), the connecting member (7) comprises four articulations (9a, 9b, 9c and 9d) intended to be respectively connected to the four link rods (5a, 5b, 5c and 5d).

6. Rear axle assembly (2) according to any one of the preceding claims, **characterized in that** the at least one first fastening plate (8a) is fastened to the rear face of the battery (3).

7. Vehicle, **characterized in that** it comprises a rear axle assembly (2) according to any one of the preceding claims.
